Europäisches Patentamt

European Patent Office

Office européen des brevets

(19)

(11) Veröffentlichungsnummer: **0 197 342**
**A1**

## (12) EUROPÄISCHE PATENTANMELDUNG

(21) Anmeldenummer: **86103232.4**

(22) Anmeldetag: **11.03.86**

(51) Int. Cl.4: **G01F 11/34** , **B65D 83/06** , **A47K 5/10**

(30) Priorität: **29.03.85 DE 3511507**

(43) Veröffentlichungstag der Anmeldung:
**15.10.86 Patentblatt 86/42**

(84) Benannte Vertragsstaaten:
**CH DE FR GB IT LI**

(71) Anmelder: **Ing. Erich Pfeiffer GmbH & Co. KG**
**Josef-Bosch-Strasse 4**
**D-7760 Radolfzell(DE)**

(72) Erfinder: **Skorka, Thomas**
**Josef-Bosch-Strasse 5**
**D-7760 Radolfzell(DE)**

(74) Vertreter: **Patentanwälte Ruff und Beier**
**Neckarstrasse 50**
**D-7000 Stuttgart 1(DE)**

(54) **Dosier-Spender für rieselfähige Feststoffe.**

(57) Ein Dosier-Spender für Pulver, Granulate oder ähnliche fließfähige Feststoffe weist einen in einer Dosier-Kammer (7) höhenverschiebbar gelagerten Kolbenschieber (15) auf, der in seiner unteren Endstellung ein Austragventil (24) und in seiner oberen Endstellung ein zu einer Nachfüllflasche (3) führendes Einlaßventil (30) verschließt. Der Kolbenschieber (15) weist einen über die am unteren Ende der Dosier-Kammer (7) vorgesehene Austragöffnung frei vorstehenden Betätigungsstößel (29) auf, über welchen er angehoben werden kann, während seine Abwärtsbewegung über eine Rückstellkraft erfolgt, welche durch das Gewicht des auf ihm lastenden Feststoffes bewirkt wird. Dadurch ist bei äußerst einfachem Aufbau eine sehr genaue Dosierung gewährleistet.

Fig.2

EP 0 197 342 A1

Dosier-Spender für rieselfähige Feststoffe

Die Erfindung betrifft einen Dosier-Spender für rieselfähige Feststoffe, insbesondere Pulver oder dgl., mit einem in einer Kammer bewegbaren Kolbenschieber, der im in Austragstellung oberen Bereich einen Kolben und darunter einen in einer Stellung eine Austragöffnung der Kammer verschließenden und in einer weiteren Stellung freigebenden Austrag-Schließteil trägt.

Bei einer bekannten, nach dem Schwerkraftprinzip wirkenden Dosiervorrichtung zum - schubweisen volumetrischen Dosieren von fließfähigen Pulvern dieser Art (DE-OS 29 17 189) bilden der Kolben-und der Austrag-Schließteil zwischen sich nach Art einer Einschnürung einen Abschnitt verringerten Querschnittes, in welchem eine bestimmte Pulvermenge hülsenförmig verdichtet wird. Im verdichteten Zustand wird diese Pulvermenge durch das umgebende, unverdichtete Pulver aus der Kammer bis unter die Austragöffnung hinausgefahren und dadurch sowie durch eine darauffolgende axiale Streckung des Abschnittes verringerten Querschnittes von der Verdichtungskraft entlastet, wodurch diese Pulvermenge für den Austrag freigegeben wird. Die ausgetragene Pulvermenge wird also nicht durch das Leervolumen der den Kolben und den Austrag-Schließteil aufnehmenden Pulverkammer bestimmt, weshalb es sich um keine Dosierkammer handelt; des weiteren liegt der Kolben in der unteren Stellung verschließend in einem den Austrag-Schließteil nur in der oberen Stellung führenden Austrag-Hals, so daß sich also in der unteren Lage des Kolbens und des Schließteiles eine Schließstellung ergibt; in dieser Schließstellung steht jedoch der unter dem Kolben angeordnete Schließteil in einer Öffnungsstellung. Die bekannte Ausbildung muß daher über einen vom Kolben nach oben ragenden Betätigungsstößel her betätigt werden, was insbesondere hinsichtlich der kontinuierlichen Zuführung des Pulvers in den Dosierbereich schwierig ist. Außerdem ergeben sich verhältnismäßig große Ungenauigkeiten bei der Dosierung der ausgebrachten Pulvermenge.

Der Erfindung liegt die Aufgabe zugrunde, einen Dosier-Spender der genannten Art so auszubilden, daß bei einfachem Aufbau ein einhändig zu betätigendes Austragen der dosierten Feststoffmenge bei gleichzeitigem Auffangen dieser Feststoffmenge und hoher Dosiergenauigkeit gewährleistet ist.

Diese Aufgabe wird bei einem Dosier-Spender der eingangs beschriebenen Art erfindungsgemäß dadurch gelöst, daß der Kolben einen Ventilschließteil eines Einlaßventiles für die das Dosiervolumen bestimmende Kammer bildet, der in der oberen Stellung des Kolbenschiebers an einem eine Nachrieselöffnung für die Dosier-Kammer begrenzenden Ventilsitz schließend anliegt, daß der Umfang des Kolbens in dessen unterer Stellung wenigstens teilweise mit einem Durchriesel-Abstand für den Feststoff von der Innenfläche der Dosier-Kammer liegt, daß der Austrag-Schließteil in der unteren Stellung des Kolbenschiebers in Schließstellung steht und daß der Kolbenschieber einen aus der Austragöffnung vorstehenden Betätigungsstößel aufweist. Durch Hineindrücken des Betätigungsstößels von Hand, beispielsweise mittels eines becherartigen Gefäßes zum Auffangen der dosierten Feststoffmenge, werden gleichzeitig das Einlaßventil geschlossen und die Austragöffnung freigegeben, so daß die die Dosier-Kammer füllende und dadurch genau dosierte Feststoffmenge aus der Dosier-Kammer durch die Austragöffnung herausrieseln kann. Sobald der Betätigungsstößel freigegeben wird, werden selbsttätig gleichzeitig die Austragöffnung geschlossen und das Einlaßventil geöffnet, so daß weiterer Feststoff aus dem Raum oberhalb des Kolbens an diesem vorbei bzw. durch diesen hindurch in die Dosier-Kammer fließen kann, bis diese wiederum gefüllt und damit die nächste dosierte Feststoffmenge für den Austrag bereitgestellt ist. Der Dosier-Spender eignet sich dadurch insbesondere zum Austragen von Reinigungs-Pulvern, beispielsweise pulverartigen Waschmitteln.

Eine besonders vorteilhafte Weiterbildung des Erfindungsgegenstandes besteht darin, daß der Kolben am oberen Ende eine Tragfläche für den rieselfähigen Feststoff, vorzugsweise eine Stirnfläche aufweist, die im radial äußeren Bereich axial mindestens so weit vorsteht wie im zentralen Bereich, insbesondere plan ist, so daß zur - schnellen Rückstellung des Kolbenschiebers in die die Austragöffnung verschließende Stellung auch das Gewicht der auf dem Kolben lagernden Feststoffmenge beiträgt.

Zur Erzielung einer sehr einfachen Ausbildung ist die Schließfläche des Ventilschließteiles unmittelbar am Kolbenkörper, vorzugsweise in Form eines sich zur Tragfläche verjüngenden und/oder an diese unmittelbar anschließenden Ringfläche vorgesehen, wodurch die Schließfläche auch eine günstige Gefällfläche bildet, über welche der Feststoff bei offenem Einlaßventil sehr schnell selbst dann fließen kann, wenn die Fließfähigkeit relativ gering ist.

2

Zur wiederholbaren genauen Festlegung des Kolbenschiebers in der der verschlossenen Austragöffnung zugehörigen Stellung, ist der Kolbenschieber in dieser Stellung anschlagbegrenzt, wobei vorzugsweise der Austragschließteil axial gesichert am zugehörigen Austragventilsitz anliegt.

Zur weiteren Beschleunigung der Überführung des Austragschließteiles in die Schließstellung ist wenigstens der Austragschließteil oder wenigstens der Austragventilsitz kegelförmig ausgebildet, wobei vorzugsweise die Kegelform einen gegenüber dem Ventilschließteil kleineren Flankenwinkel aufweist und insbesondere die Austragöffnung unmittelbar durch den Austragventilsitz gebildet ist. Das schnelle vollständige Schließen der Austragöffnung verringert auch wesentlich die Gefahr, daß nach Freigabe des Kolbenschiebers noch Feststoff aus der Austragöffnung nachrieseln kann, was insbesondere bei sehr gut fließfähigen Feststoffen von Bedeutung ist.

Das schnelle und vollständige Leerfließen der Dosier-Kammer und damit die Dosiergenauigkeit können noch weiter dadurch verbessert werden, daß oberhalb der Schließfläche des Austragschließteiles eine nach unten mindestens auf die Weite des Austragschließteiles erweiterte Abrieselfläche vorgesehen ist, die vorzugsweise durch eine zur Schließfläche entgegengesetzte und/oder unmittelbar an diese anschließende, in jeder Ventilstellung frei in der Dosier-Kammer liegende Kegelfläche des Austragschließteiles gebildet ist, so daß keinerlei Flächen vorhanden sind, auf welchen sich der Feststoff festsetzen kann.

In weiterer Ausgestaltung der Erfindung sind der Kolben und der Austragschließteil über einen in ihrer gemeinsamen Achse und frei in der Dosier-Kammer liegenden Schaft miteinander verbunden, der vorzugsweise unmittelbar in die ebene untere Stirnfläche des Kolbens übergeht und/oder mit seinem Umfang unmittelbar an den Umfang des verjüngten Endes der Abrieselfläche anschließt, so daß bei äußerst einfachem, beispielsweise einteiligem Aufbau des Kolbenschiebers auch unterhalb des Kolbens Verhältnisse gegeben sind, die das Fließen des Feststoffes nicht behindern und für eine schnelle Füllung der Dosier-Kammer bei geöffnetem Einlaßventil sorgen.

Die Schnelligkeit des Herausfließens aus der Austragöffnung bei geöffnetem Austragschließteil läßt sich in einfacher Weise dadurch erhöhen, daß der Betätigungsstößel eine gegenüber dem verjüngten Ende reduzierte Verlängerung des Austragschließteiles bildet und/oder in Verlängerung des Schaftes, also in dessen Mittelachse liegt. Der Betätigungsstößel steht zweckmäßig um mehr als den maximalen Hub des Kolbenschiebers auch dann frei aus der Austragöffnung vor, wenn sich der Austragschließteil in Öffnungsstellung befindet, so daß sich der Betätigungsstößel auch mit verhältnismäßig tiefen Gefäßen öffnen läßt und die Austragöffnung bei Anlage des Betätigungsstößels am Boden des Gefäßes mit relativ großem Abstand oberhalb dieses Bodens liegt.

Zur weiteren Vereinfachung des Aufbaues des Dosier-Spenders ist die Austragöffnung in einem Stirndeckel der Dosier-Kammer vorgesehen, der vorzugsweise in das untere Ende des Mantels der Dosier-Kammer eingesetzt ist. Durch Abnehmen des Deckels läßt sich auch der Kolbenschieber vollständig herausnehmen und ebenso wie das Innere der Dosier-Kammer infolge leichter Zugänglichkeit gut reinigen.

Durch die beschriebene Ausbildung des Dosier-Spenders ist es möglich, die wirksame Dosier-Kammer und damit das je Austragvorgang ausgebrachte Dosiervolumen volumenveränderbar auszubilden, so daß die ausgetragene Feststoffmenge jederzeit an die jeweiligen Erfordernisse angepaßt werden kann. Bei einer sehr einfachen Ausführungsform ist die Dosier-Kammer zu diesem Zweck teleskopartig in ihrer Axialerstreckung veränderbar, wobei vorzugsweise der Stirndeckel axial verstellbar und festsetzbar am Mantel der Dosier-Kammer geführt ist. In entsprechender Weise ist dann zweckmäßig auch der Kolbenschieber hinsichtlich des Abstandes zwischen dem Ventilschließteil des Einlaßventiles und dem Austragschließteil längenveränderbar, was zum Beispiel durch teleskopartige Ausbildung des Kolbenschiebers erreicht werden kann.

Der erfindungsgemäße Dosier-Spender kann unmittelbar Bestandteil eines Speichers für den Feststoff, beispielsweise eines flaschenartigen Gefäßes für den Feststoff sein, wobei er in diesem Fall zweckmäßig am Flaschenhals mit einer im Bereich seines Einlaßventiles liegenden Muffe oder dgl. befestigt oder der Mantel der Dosier-Kammer einteilig mit dem Gefäß, insbesondere aus Kunststoff ausgebildet ist. Die Dosier-Kammer kann aber auch in besonders vorteilhafter Weise Bestandteil eines Flaschenhalters, insbesondere eines Wandhalters, sein, wobei sie vorzugsweise oberhalb des Ventilsitzes des Einlaßventiles einen Anschlußflansch für die Flasche aufweist, die dann lediglich durch Aufstecken jederzeit gewechselt werden kann. Durch Ausbildung des Flaschenhalters als Wandhalter ist eine einfache Unterbringung bzw. Aufbewahrung sowie eine jederzeitige Einsetzbarkeit des Spenders gewährleistet, ohne daß der Spender vor jedem Dosiervorgang von Hand in eine bestimmte Lage gebracht werden muß.

Diese und weitere Merkmale von bevorzugten Weiterbildungen der Erfindung gehen auch aus der Beschreibung und den Zeichnungen hervor, wobei die einzelnen Merkmale jeweils für sich allein oder zu mehreren in Form von Unterkombinationen bei einer Ausführungsform der Erfindung und auf anderen Gebieten verwirklicht sein können. Ausführungsbeispiele der Erfindung sind in den Zeichnungen dargestellt und werden im folgenden näher erläutert. In den Zeichnungen zeigen

Fig. 1 einen erfindungsgemäßen, mit einem Wandhalter vereinigten Dosier-Spender in ausschnittsweiser Ansicht,

Fig. 2 den Dosier-Spender gemäß Figur 1 im Axialschnitt und in vergrößerter Darstellung,

Fig. 3 einen Ausschnitt der Figur 2, jedoch in Austragstellung.

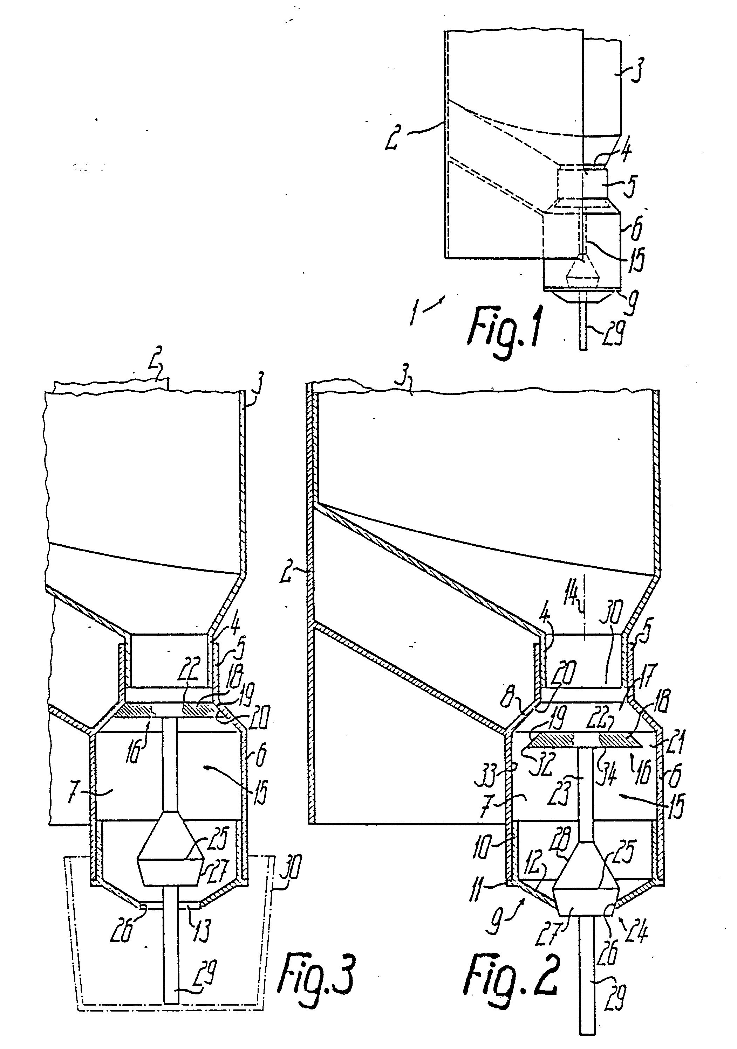

Wie die Figuren 1 bis 3 zeigen, weist ein erfindungsgemäßer Dosier-Spender 1 einen an einer Gebäudewand oder dgl. zu befestigenden Wandhalter 2 für die leicht auswechselbare Aufnahme einer Nachfülli-Flasche 3 auf. Die Flasche 3 oder dgl., die den auszutragenden, fließfähigen Feststoff, beispielsweise Pulver, Granulat oder dgl. aufnimmt, ist mit ihrem, die Entleerungsöffnung begrenzenden Hals 4 oder dgl. nach unten gerichtet in einen hülsenförmigen, vertikalen Anschlußflansch 5 zu stecken, derart, daß sie in Gebrauchsstellung rückstandsfrei leerlaufen kann.

Der Anschlußflansch 5 bildet das obere Ende des im wesentlichen achssymmetrischen Mantels 6 einer Dosier-Kammer 7, welcher einteilig mit dem Wandhalter 2 ausgebildet sein kann, in dessen unteren Bereich liegt und nach unten über den übrigen Wandhalter vorsteht. Der Anschlußflansch 5 ist gegenüber dem übrigen, im wesentlichen zylindrischen und die Dosier-Kammer 7 begrenzenden Abschnitt des Mantels 6 in der Weite reduziert und geht in den eigentlichen Mantel 6 über einen kegelstumpfförmigen Zwischenabschnitt 8 über, der einen Kegelwinkel von etwa 90° hat. Der Mantel 6 geht bis zu seinem unteren Ende mit konstanter Weite durch und ist am unteren Ende mit einem Stirndeckel 9 verschlossen, der mit einem hülsenförmig nach oben gerichteten Zentrieransatz 10 gleitbar an der Innenfläche des Mantels 6 anliegt. In der oberen Endstellung liegt der Stirndeckel 9 an der unteren Stirnfläche des Mantels 6 mit einem über den Zentrieransatz 10 nach außen vorstehenden Ringflansch 11 an. An das untere Ende des über seine Länge durchgehend konstante Innenquerschnitte aufweisenden Zentrieransatzes 10 bzw. an den Innenumfang des Ringflansches 11 schließt sich ein nach unten stumpfwinklig kegelstumpfförmig verengender Ausfließ-Trichter 12 des

Stirndeckels 9 an, dessen unteres, offenes Ende eine achssymmetrische Austragöffnung 13 begrenzt, welche an der tiefsten Stelle der Dosier-Kammer 7 und in deren Mittel-Achse 14 liegt. Die Austragöffnung 13 weist eine mittlere Weite auf, die kleiner als die lichte Weite des Halses 4 bzw. des Anschlußflansches 5 und kleiner als die Hälfte der lichten Weite der Dosier-Kammer 7 ist.

In der Dosier-Kammer 7 ist ein in der Achse 14 stehender und zu dieser Achse 14 achssymmetrischer Kolbenschieber 15 angeordnet, der in Richtung der Achse 14 aufwärts und abwärts gegenüber dem Mantel 6 bewegbar gelagert ist und am oberen Ende einen Kolben 16 trägt. Der Kolben 16 bildet gleichzeitig einen kegelstumpfförmigen Ventilschließteil 18 eines die Verbindung zwischen der Flasche 3 und der Dosier-Kammer 7 öffnenden und schließenden Einlaßventiles 17 und hat eine Axialerstreckung, die wesentlich kleiner als seine Weite bzw. sein Durchmesser ist. Der als Gefällfläche mit einem Neigungswinkel von etwa 45° ausgebildeten, nach oben verjüngten Schließfläche 19 des Ventilschließteiles 18 ist als Ventilsitz 20 die gleichen Flankenwinkel aufweisende Innenfläche des Zwischenabschnittes 8 zugeordnet. Diese Innenfläche, die eine größere Axialerstreckung als die Schließfläche 19 hat, bildet den Ventilsitz 20 unmittelbar im Anschluß an die Innenfläche des Anschlußflansches 5. Die größte Weite bzw. der größte Durchmesser des Kolbens 16 und damit des Schließteiles 18 ist kleiner als die Innenweite des Mantels 6 und damit der Dosier-Kammer 7 wenigstens in dem Bereich, in welchem der Ventilschließteil 18 steht, so daß zwischen dem Mantel 6 und dem Ventilschließteil 18 eine sich im lichten Querschnitt nach unten verjüngende Durchfluß-Öffnung 21 gebildet ist, die im dargestellten Ausführungsbeispiel ringförmig ist.

In der oberen Endstellung des Kolbenschiebers 15 gemäß Figur 3 liegt die Schließfläche 19 dicht an dem Ventilsitz 20 an, so daß der Durchfluß von der Flasche 3 in die Dosier-Kammer 7 verschlossen ist, jedoch der Feststoff in der Flasche 3 nach Art einer Säule auf dem Ventilschließteil 18 lastet.

Das obere Ende des Kolbens 16 bildet als obere Stirnfläche des Ventilschließteiles 18 eine zur Mittelachse 14 rechtwinklige ebene Tragfläche 22 für die über dem Einlaßventil 17 stehende Säule des fließfähigen Feststoffes, durch welche der Kolbenschieber 15 zusätzlich zu seinem Eigengewicht ständig einer nach unten gerichteten Rückstellkraft ausgesetzt ist.

An der Unterseite geht der Kolben 16 in einen in der Dosier-Kammer 7 und in der Achse 14 liegenden Schaft 23 über, der gegenüber dem Kolben 16 stark reduzierten und über seine Länge konstanten Querschnitt aufweist, beispielsweise zylindrisch ist. Das untere Ende des Schaftes 23 geht in den in der Achse 14 liegenden Austrag-schließteil 25 eines der Austragöffnung 13 zugeordneten Austragventiles 24 über, dessen Ventilsitz 26 durch die Innenfläche der Austragöffnung 13 gebildet ist. Die Schließfläche 27 des Austragschließteiles 25 ist mit gleichem, spitzem Flankenwinkel wie der Ventilsitz 26 nach oben erweitert, insbesondere kegelstumpfförmig ausgebildet, wobei die Axialerstreckung der Schließfläche 27 wesentlich größer als die des Ventilsitzes 26 ist, an welchem sie in Schließstellung etwa im mittleren Bereich ihrer Länge anliegt. Das obere, weiteste Ende des Austragschließteiles 25 bzw. der Schließfläche 27 setzt sich in einer Abrieselfläche 28 fort, die nach oben spitzwinklig bis zum Übergang in den Umfang des Schaftes 23 verjüngt ist und eine gegenüber der Schließfläche 27 größere Axialerstreckung aufweist. In der unteren Endstellung des Kolbenschiebers 15 sitzt die Schließfläche 27 im Ventilsitz 26 fest, wodurch das Austragventil 24 geschlossen und gleichzeitig die untere Endstellung des Kolbenschiebers 15 anschlagbegrenzt ist. In dieser Endstellung liegt die Tragfläche 22 des Kolbens 16 etwa in der Ebene des oberen Endes des zylindrischen Abschnittes der Dosier-Kammer 7 bzw. des unteren Endes des Zwischenabschnittes 8.

An das untere, durch eine ebene Stirnfläche gebildete Ende des Austragschließteiles 25 schließt sich ein in der Achse 14 stehender Betätigungsstößel 29 an, der sowohl gegenüber der Austragöffnung 13 bzw. dem Ventilsitz 26 als auch gegenüber dem unteren Ende des Austragschließteiles 25 wesentlichen kleineren Durchmesser, nämlich etwa gleichen Durchmesser wie der Schaft 23 hat. Die Länge des Betätigungsstößels 29 ist wesentlich größer als der maximale Hub des Kolbenschiebers 15, wobei der Betätigungsstößel 29 unterhalb des Stirndeckels 9 frei zugänglich vorsteht.

Der erfindungsgemäße Dosier-Spender ist zur Verwendung nach folgendem Verfahren geeignet: Mit einem Gefäß beispielsweise einem in Figur 3 strichpunktiert angedeuteten, relativ niederen Einfüllbecher 30 wird von unten derart an den in Schließstellung stehenden Betätigungsstößel 29 herangefahren, daß dessen unteres Ende auf dem Boden des Einfüllbechers 30 aufsitzt. Beim weiteren Anheben des Einfüllbechers 30 wird der Kolbenschieber 15 mitgenommen, wodurch das Austragventil 24 geöffnet und gleichzeitig das Einlaßventil 17 geschlossen wird. Der unterhalb des Einlaßventiles 17 in der Dosier-Kammer 7 befindliche, rieselfähige Fest stoff fließt dadurch vollständig durch die freigegebene Austragöffnung 13 in den Einfüllbecher 30. Beim Absenken bzw. Entfernen des Einfüllbechers 30 wird der Betätigungsstößel 29 freigegeben und der Kolbenschieber 15 unter dem Druck des darüber befindlichen Feststoffes in seine untere Endstellung bewegt, bis das Austragventil 24 geschlossen und das Einlaßventil 17 vollständig geöffnet ist. Durch die oberhalb des Ventilsitzes 20 durch den Anschlußflansch 5 begrenzte Nachrieselöffnung 30 fließt der Feststoff aus der Flasche 3 unter gleichzeitiger Druckbelastung des Kolbenschiebers 15 nach unten, wobei er die Durchfluß-Öffnung 21 zwischen dem größten Umfang 32 des Ventilschließteiles 18 und der Innenfläche 33 der Dosier-Kammer 7 passiert, bis die Dosier-Kammer 7 wieder durchgehend bis zum Flascheninhalt gefüllt und dadurch der Dosier-Spender 1 für eine weitere dosierte Entnahme bereit ist.

Es ist auch denkbar, den Kolbenschieber 15 mit einer gesonderten Rückstellfeder zu belasten, jedoch ergibt sich durch die beschriebene Ausbildung eine besonders sichere Funktion; diese kann noch dadurch verstärkt werden, daß die Tragfläche 22 napfförmig vertieft ist. Die untere Stirnfläche 34 des Kolbens 16 bzw. des Ventilschließteiles 18, die im dargestellten Ausführungsbeispiel eben ist, kann auch durch nach unten sich der Achse 14 annähernde Flanken, also beispielsweise eine Kegelstumpffläche gebildet sein, so daß durch Anpassung dieser Fläche an den Schüttkegel des zu dosierenden Feststoffes eine noch schnellere und vollständigere Füllung der Dosier-Kammer 7 gewährleistet ist. Die sichere Funktion des Dosier-Spenders 1 ist aber auch dadurch bereits gewährleistet, daß der Kolbenschieber 15 nur in seiner oberen und in seiner unteren Endstellung in unmittelbarem, zentriertem Eingriff mit dem die Dosier-Kammer 7 bildenden Gehäuse steht und in den Zwischenstellungen schwimmend bzw. gegenüber dem Gehäuse berührungsfrei liegt.

**Ansprüche**

1. Dosier-Spender für rieselfähige Feststoffe, insbesondere Pulver oder dgl., mit einem in einer Kammer bewegbaren Kolbenschieber, der im in Austragstellung oberen Bereich einen Kolben und darunter einen in einer Stellung eine Austragöffnung der Kammer verschließenden und in einer weiteren Stellung freigebenden Austrag-Schließteil trägt, dadurch gekennzeichnet, daß der Kolben (16) einen Ventilschließteil (18) eines Einlaßventiles (17) für die das Dosiervolumen bestimmende Kammer (7) bildet, der in der oberen Stellung des Kolbenschiebers (15) an einem eine Nachrieselöffnung - (30) für die Dosier-Kammer (7) begrenzenden Ventilsitz (20) schließend anliegt, daß der Umfang - (32) des Kolbens (16) in dessen unterer Stellung wenigstens teilweise mit einem Durchriesel-Abstand für den Feststoff von der Innenfläche (33) der Dosier-Kammer (7) liegt, daß der Austrag-Schließteil (25) in der unteren Stellung des Kolbenschiebers (15) in Schließstellung steht und daß der Kolbenschieber (15) einen aus der Austragöffnung (13) vorstehenden Betätigungsstößel (29) aufweist.

2. Spender nach Anspruch 1, dadurch gekennzeichnet, daß der Kolben (16) am oberen Ende eine Tragfläche (22) für den rieselfähigen Feststoff, vorzugsweise eine Stirnfläche aufweist, die im radial äußeren Bereich axial mindestens so weit vorsteht wie im zentralen Bereich, insbesondere plan ist.

3. Spender nach Anspruch 1 oder 2, dadurch gekennzeichnet, daß die Schließfläche (19) des Ventilschließteiles (18) unmittelbar am Kolbenkörper, vorzugsweise in Form eines sich zur Tragfläche (22) verjüngenden und/oder an diese unmittelbar anschließenden Ringfläche, vorgesehen und vorzugsweise kegelstumpfförmig, vorzugsweise mit einem Kegelwinkel um 90°, ausgebildet ist.

4. Spender nach einem der Ansprüche 1 bis 3, dadurch gekennzeichnet, daß der Kolbenschieber (15) in der Schließstellung (Fig. 2) des Austragschließteiles (25) anschlagbegrenzt ist, wobei vorzugsweise der Austragschließteil (25) axial gesichert am zugehörigen Austragventilsitz (26) anliegt.

5. Spender nach einem der Ansprüche 1 bis 4, dadurch gekennzeichnet, daß der Austragschließteil (25) und/oder der Austragventilsitz (26) kegelförmig, vorzugsweise mit einem gegenüber dem Ventilschließteil (18) kleineren Flankenwinkel ausgebildet und insbesondere die Austragöffnung - (13) unmittelbar durch den Austragventilsitz (26) gebildet ist.

6. Spender nach einem der Ansprüche 1 bis 5, dadurch gekennzeichnet, daß oberhalb der Schließfläche (27) des Austragschließteiles (25) eine nach unten mindestens auf die Weite des Austragschließteiles (25) erweiterte Abrieselfläche - (28) vorgesehen ist, die vorzugsweise durch eine zur Schließfläche (27) entgegengesetzte und/oder unmittelbar an diese anschließende, in jeder Ventilstellung frei in der Dosier-Kammer (7) liegende Kegelfläche des Austragschließteiles (25) gebildet ist.

7. Spender nach einem der Ansprüche 1 bis 6, dadurch gekennzeichnet, daß der Kolben (16) und der Austragschließteil (25) über einen in ihrer gemeinsamen Achse (14) und frei in der Dosier-Kammer (7) liegenden Schaft (23) miteinander verbunden sind, der vorzugsweise unmittelbar in die ebene untere Stirnfläche (34) des Kolbens (16) übergeht und/oder mit seinem Umfang unmittelbar an den Umfang des verjüngten Endes der Abrieselfläche (28) anschließt.

8. Spender nach einem der Ansprüche 1 bis 7, dadurch gekennzeichnet, daß der Betätigungsstößel (29) eine gegenüber dem verjüngten Ende reduzierte Verlängerung des Austragschließteiles (25) bildet und/oder in Verlängerung des Schafter (23) liegt wobei vorzugsweise der Kolbenschieber (15), insbesondere einschließlich Kolben (16), Schaft (23), Auslaßschließteil (25) und Betätigungsstößel (29), einteilig ausgebildet ist.

9. Spender nach einem der Ansprüche 1 bis 8, dadurch gekennzeichnet, daß die Austragöffnung - (13) in einem Stirndeckel (12) der Dosier-Kammer - (7) vorgesehen ist, der vorzugsweise in das untere Ende des Mantels (6) der Dosier-Kammer (7) eingesetzt ist.

10. Spender nach einem der Ansprüche 1 bis 9, dadurch gekennzeichnet, daß die Dosier-Kammer - (7) volumenveränderbar, insbesondere teleskopartig in ihrer Axialerstreckung veränderbar ausgebildet ist, wobei vorzugsweise der Stirndeckel (12) axial verstellbar und festsetzbar am Mantel (6) der Dosier-Kammer (7) geführt und/oder vorzugsweise Bestandteil eines Flaschenhalters (2), insbesondere eines Wandhalters ist und vorzugsweise oberhalb des Ventilsitzes - (20) des Einlaßventils (17) einen Anschlußflansch - (5) für die Flasche (3) aufweist.

Fig.1

Fig.3

Fig.2

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| | **EINSCHLÄGIGE DOKUMENTE** | | EP 86103232.4 |
| X | GB - A - 8 921 A.D. 1899 (LEE)  * Fig. 4,5 * | 1,4,5, 8 | G 01 F 11/34 |
| A | | 2,3,7, 9 | B 65 D 83/06  A 47 K  5/10 |
| | -- | | |
| X | AT - B - 220 320 (KUHN)  * Fig. 1,2 * | 1,4,8 | |
| A | | 2,3,5, 9 | |
| | -- | | |
| X | GB - A - 1 553 271 (MARSHALL)  * Fig. 1 * | 1,4,5, 6 | |
| A | | 2,3,9 | |
| | -- | | RECHERCHIERTE SACHGEBIETE (Int. Cl.4) |
| A | GB - A - 477 922 (BARLOW)  * Fig. 4-6 * | 1-5,7 | |
| | ---- | | G 01 F 11/00  B 65 D 47/00  B 65 D 83/00  B 67 D  3/00  A 47 K  5/00 |

Der vorliegende Recherchenbericht wurde für alle Patentansprüche erstellt.

| Recherchenort | Abschlußdatum der Recherche | Prüfer |
|---|---|---|
| WIEN | 26-06-1986 | BURGHARDT |